Europäisches Patentamt

European Patent Office

Office européen des brevets

(11) Veröffentlichungsnummer: **0 295 502**

**A1**

# EUROPÄISCHE PATENTANMELDUNG

(21) Anmeldenummer: **88108807.4**

(22) Anmeldetag: **01.06.88**

(51) Int. Cl.⁴: **H01L 23/32 , G02B 6/42 , G02B 7/00**

(30) Priorität: **08.06.87 US 59719**

(43) Veröffentlichungstag der Anmeldung:
**21.12.88 Patentblatt 88/51**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

Anmelder: **IBM INTERNATIONAL BUSINES MACHINES CORPORATION**
**P.O. Box 950**
**Poughkeepsie, NY 12602(US)**

(72) Erfinder: **Präuer, Heinz**
**Laibacher Strasse 7**
**D-8000 München 80(DE)**
Erfinder: **Schulz, Dietmar**
**Allgäuer Strasse 59**
**D-8000 München 71(DE)**
Erfinder: **Pohl, Peter**
**Lohfeldstrasse 12**
**D-8033 Krailling(DE)**
Erfinder: **Johnson, Alfred**
**30 Brockland Road**
**Poughkeepsie New York(US)**

(74) Vertreter: **Mehl, Ernst, Dipl.-Ing.**
**Postfach 22 13 17**
**D-8000 München 22(DE)**

(54) **Verfahren und Vorrichtung zum Eliminieren toleranzbedingter Schwankungen eines vorwählbaren Abstandes zwischen Bauteilen der optischen Nachrichtenübertragungstechnik.**

(57) In einem Metallgehäuse (1) sind U-förmige Ausnehmungen zum Eindrücken flanschartiger Ansätze (8) von z.B. Sende- und Empfangsmodulen vorgesehen. Die zueinander parallel vorgesehenen Module sollen einen Abstand voneinander haben, der frei von toleranzbedingten Schwankungen ist. Zu diesem Zweck sind die aus Metall bestehenden Ansätze (8) mit einem Kunststoffmantel (11) versehen, in den sich an den Seitenwänden der U-Ausnehmungen vorgesehene Rippen (6) eingraben. Mittels einer Lehre erfolgt das Eindrücken genau im vorgesehenen Abstand. Eine Außermittigkeit zu einer U-Ausnehmung wird dabei durch unterschiedlich starkes Eindrücken der Rippen auf der einen und auf der anderen Seite des Ansatzes ermöglicht.

FIG 1

## Verfahren und Vorrichtung zum Eliminieren toleranzbedingter Schwankungen eines vorwählbaren Abstandes zwischen Bauteilen der optischen Nachrichtenübertragungstechnik

Die Erfindung bezieht sich auf ein Verfahren zum Eliminieren toleranzbedingter Schwankungen eines vorwählbaren Abstandes, den wenigstens zwei zueinander parallel angeordnete Bauteile der optischen Nachrichtenübertragungstechnik voneinander haben, bei dem die jeweils einen flanschartigen Ansatz aufweisenden Bauteile quer zu ihrer Längserstreckung jeweils mit diesem Ansatz in einer U-förmigen Ausnehmung einer Wand eines für die wenigstens zwei Bauteile gemeinsam vorgesehenen Gehäuses fixiert werden.

In der optischen Nachrichtenübertragungstechnik werden häufig Sende- und Empfangsmodule, d.h. elektro-optische und opto-elektrische Wandler an den Enden einer optischen Nachrichtenübertragungsstrecke, in einem gemeinsamen Metallgehäuse angeordnet. Dabei ist es günstig, wenn die durch die beiden Module gebildeten Bauteile sich in dem Metallgehäuse genau in einem vorher bestimmten Abstand befinden.

Aufgabe vorliegender Erfindung ist es daher, ein Verfahren anzugeben, mit dessen Hilfe ein von toleranzbedingten Schwankungen freier, vorwählbarer Abstand zwischen jeweils zwei Bauteilen der optischen Nachrichtenübertragungstechnik erhalten werden kann. Außerdem ist es Aufgabe vorliegender Erfindung, für dieses Verfahren besonders geeignete flanschartige Ansätze der Bauteile zu -schaffen.

Erfindungsgemäß ergibt sich die Lösung dieser Aufgabe dadurch, daß der aus einem relativ harten Material bestehende Ansatz mit einer Schicht aus einem plastisch deformierbaren, relativ weichen Material bedeckt und derart zwischen die mit parallel zu ihrem Verlauf mit wenigstens einer vorstehenden Rippe versehenen Seitenwände einer U-Ausnehmung eingedrückt wird, daß sich die wenigstens eine Rippe auf der einen Seite des Ansatzes weniger stark in das plastisch deformierbare Material eindrückt als die Rippe auf der anderen Seite des Ansatzes und sich dadurch der vorgesehene Abstand zum Nachbarbauteil ergibt.

Hierzu können die Bauteile beim Eindrücken z. B. durch eine Lehre im vorbestimmten Abstand gehalten werden.

Vorteilhafte Ausgestaltungen von Ansätzen der Bauteile, wie sie bei dem erfindungsgemäßen Verfahren verwendet werden können, ergeben sich aus den Merkmalen der Unteransprüche.

Ausführungsbeispiele der Erfindung werden nachfolgend anhand von sechs FIG noch näher erläutert.

Dabei zeigen, in grobschematischer Darstellung unter Weglassung aller nicht unbedingt zum Verständnis der Erfindung erforderlichen Einzelheiten,

FIG 1 die Wand eines Metallgehäuses mit in dieser Wand vorgesehenen U-Ausnehmungen und in diesen Ausnehmungen sitzenden flanschartigen Ansätzen eines Sende- und eines Empfangsmoduls der optischen Nachrichtenübertragungstechnik,

FIG 2 einen flanschartigen Ansatz an einem Sende- oder Empfangsmodul ohne Ummantelung des Ansatzes, und

FIG 3 bis FIG 6 verschiedene Möglichkeiten zur Ummantelung eines Ansatzes mit plastisch deformierbarem Material.

Im einzelnen ist den FIG zu entnehmen, daß ein Metallgehäuse 1 eine Wand 2 aufweist, in die U-förmige Ausnehmungen 3 so eingearbeitet sind, daß diese unter sich gleich großen Ausnehmungen 3 zu einem Rand 4 der Wand 2 hin offen sind. Seitenwände 5 der U-Ausnehmungen 3 sind mit Rippen 6 versehen, die sich von der offenen Seite einer U-Ausnehmung zum geschlossenen Ende der U-Ausnehmung hin erstrecken und dabei parallel zur Wand 2 gerichtet sind. Die Rippen 6 verringern dadurch den Abstand zwischen den Seitenwänden 5 einer jeden U-Ausnehmung.

Zwei Bauteile 7 der optischen Nachrichtenübertragungstechnik, vorzugsweise ein Sende- und ein Empfangsmodul, weisen jeweils ein prismatisches Gehäuse auf, das für beide Module vorteilhaft gleich groß bemessen ist und in seinem Inneren einen elektro-optischen bzw. opto-elektrischen Wandler sowie weitere Schaltungsteile enthält, wie z.B. Verstärker oder ähnliches. An einer Stirnseite 16 der Bauteile 7 sind diese mit einem flanschartigen Ansatz 8 versehen, der vorzugsweise aus Metall besteht und von einer Längsbohrung 9 durchsetzt wird. Dadurch bildet der Ansatz 8 eine Buchse, in die ein Steckerstift eingesteckt werden kann. Ein in dem nicht dargestellten Steckerstift gefaßtes Ende einer licht-leitenden Faser wird auf diese Weise an ein Bauelement angekoppelt, das im Bauteil 7 angeordnet ist und entweder über die Faser ankommende Lichtsignale in elektrische Signale umwandelt oder umgekehrt einem Bauteil 7 zugeführte elektrische Signale in optische Signale umwandelt und diese in die Faser einspeist.

Zwei zusammengehörende Bauteile 7 (beispielsweise Sender und Empfänger) müssen in einem genauen Abstand 10 voneinander angeordnet sein, um z. B. bei dem elektrischen Anschluß der Bauteile 7 durch Einstecken von aus den Bauteilen 7 vorstehenden Anschlußstiften in die Rasterbohrungen einer Leiterplatte das gemeinsame Einstecken der Stifte nicht zu behindern.

Der Abstand 10 der beiden Bauteile 7 voneinander wird durch das Fixieren der Ansätze 8 in den U-Ausnehmungen 3 der Gehäusewand 2 festgelegt.

Um dabei keinen übermäßig großen Aufwand bei der Einarbeitung der U-Ausnehmungen in die Wand 2 und der Herstellung der Ansätze 8 treiben zu müssen, sind die Ansätze 8, die aus einem relativ harten Metall bestehen, mit einer Kunststoffschicht 11 ummantelt. Diese Kunststoffschicht 11 ist so dick bemessen, daß die Rippen 6, wenn diese sich in die Kunststoffschicht 11 eingraben, den Ansatz 8 nicht berühren können.

Werden die beiden Bauteile 7 beim Eindrücken der ummantelten Ansätze 8 in die jeweiligen U-Ausnehmungen mittels einer nicht dargestellten Hilfsvorrichtung genau im vorgesehenen Abstand voneinander gehalten, so werden bei einer toleranzbedingten Abweichung des Abstandes der Mitten der beiden U-Ausnehmungen voneinander vom Abstand 10, die beiden Ansätze 8 etwas außermittig in die jeweiligen U-Ausnehmungen eingedrückt. Dadurch graben sich die Rippen 6 auf der einen Seite eines Ansatzes 8 stärker und auf der anderen Seite weniger stark in die Kunststoffschicht 11 ein, wodurch die Bauteile 7 nach dem Eindrücken der Ansätze 8 in die zugehörigen U-Ausnehmungen genau im vorgesehenen Abstand voneinander an der Wand 2 fixiert sind.

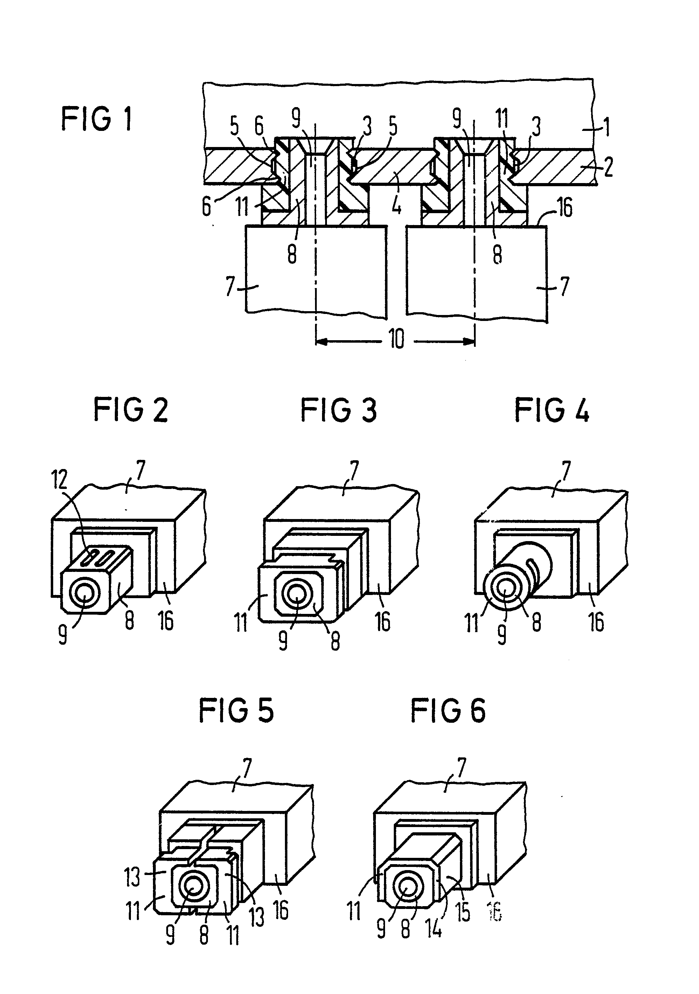

Aus FIG 2 ist zu ersehen, daß der metallische, flanschartige Ansatz 8 außen mit Vertiefungen 12 versehen sein kann, die die Verbindung zwischen flanschartigem Ansatz 8 und Kunststoffschicht 11 verbessern. Statt der Vertiefungen können auch kleine Erhebungen oder beides gemischt vorgesehen werden.

FIG 3 zeigt einen flanschartigen Ansatz 8, der durch Umspritzen mit der Kunststoffschicht 11 versehen worden ist.

FIG 4 zeigt, daß der flanschartige Ansatz 8 statt mit rechteckigem Querschnitt auch einen runden Querschnitt aufweisen kann, so daß der Ansatz 8 zylindrisch ausgebildet ist.

Während FIG 3 und FIG 4 jeweils auf einen Flansch 8 aufgebrachte Kunststoffschichten 11 zeigen, die mehr oder weniger irreversibel mit ihrem Ansatz 8 verbunden sind, so daß ein solcher flanschartiger Ansatz nur ein einziges Mal in eine U-Ausnehmung 3 eingedrückt werden kann, zeigen FIG 5 und FIG 6 Ansätze 8, auf die zur Bildung der Kunststoffschicht 11 vorgefertigte Kunststoffteile 13, 14 aufgesteckt sind.

Bei dem Ausführungsbeispiel nach FIG 5 besteht die Kunststoffschicht 11 aus zwei vorgefertigten U-förmigen Halbschalen 13, die quer zur Eindrückrichtung des Ansatzes 8 in eine U-Ausnehmung 3 von beiden Seiten her auf einen Ansatz 8 mit rechteckigem Querschnitt aufgesteckt sind. Beim Eindrücken des Ansatzes 8 werden die beiden Halbschalen 13, die auf dem Ansatz 8 sitzen, zusätzlich gegeneinander gedrückt und können daher nicht vom Ansatz 8 abgleiten.

FIG 6 zeigt eine Kunststoffummantelung 11 eines Ansatzes 8, bei der ein vorgefertigtes U-förmiges Kunststoffteil lediglich von einer Seite her auf den Ansatz 8 aufgeschoben worden ist. Das U-förmige Teil 14 wird dabei zweckmäßigerweise so auf den flanschartigen Ansatz 8 aufgeschoben, daß die geschlossene Seite des Teiles 14 der geschlossenen Seite einer U-Ausnehmung 3 zugewandt ist. Dadurch kann das Teil 14 beim Eindrücken des Ansatzes 8 nicht von dem Ansatz 8 abgleiten. Die Rippen 6 graben sich dann in die Seiten 15 des Teiles 14 ein.

## Ansprüche

Verfahren zum Eliminieren toleranzbedingter Schwankungen eines vorwählbaren Abstandes, den wenigstens zwei zueinander parallel angeordnete Bauteile der optischen Nachrichtenübertagungstechnik voneinander haben, bei dem die jeweils einen flanschartigen Ansatz aufweisenden Bauteile quer zu ihrer Längserstreckung jeweils mit diesem Ansatz in einer U-förmigen Ausnehmung einer Wand eines für die wenigstens zwei Bauteile gemeinsam vorgesehenen Gehäuses fixiert werden, **dadurch gekennzeichnet,** daß der aus einem relativ harten Material bestehende Ansatz mit einer Schicht aus einem plastisch deformierbaren, relativ weichen Material bedeckt und derart zwischen die mit parallel zu ihrem Verlauf mit wenigstens einer vorstehenden Rippe versehenen Seitenwände einer U-Ausnehmung eingedrückt wird, daß sich die wenigstens eine Rippe auf der einen Seite des Ansatzes weniger stark in das plastisch deformierbare Material eindrückt als die Rippe auf der anderen Seite des Ansatzes und sich dadurch der vorgesehene Abstand zum Nachbarbauteil ergibt.

2. Ansatz zur Durchführung des Verfahrens nach Anspruch 1, **dadurch gekennzeichnet,** daß der aus Metall bestehende Ansatz (8) mit einer Kunststoffschicht (11) ummantelt ist.

3. Ansatz zur Durchführung des Verfahrens nach Anspruch 1, **dadurch gekennzeichnet,** daß auf den aus Metall bestehenden, im Querschnitt rechteckigen Ansatz (8), zwei vorgefertigte, aus Kunststoff bestehende U-förmige Halbschalen (13) quer zur Eindrückrichtung des Ansatzes (8) in eine U-Ausnehmung (3) aufgesteckt sind.

4. Ansatz zur Durchführung des Verfahrens nack Anspruch 1, **dadurch gekennzeichnet,** daß auf den Ansatz (8) ein vorgefertigtes, U-förmiges Kunststoffteil (14) mit seinen U-Seiten (15) parallel zu den U-Seitenwänden (5) der U-Ausnehmung aufgeschoben ist.

FIG 1

FIG 2    FIG 3    FIG 4

FIG 5    FIG 6

Europäisches
Patentamt

**EUROPÄISCHER RECHERCHENBERICHT**

Nummer der Anmeldung

EP 88 10 8807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 912 189 (SOCIETE POUR L'EQUIPEMENT DE VEHICULES) <br> * Seite 7, Zeile 5 - Seite 9, Zeile 24; Abbildungen * <br> --- | 1-4 | H 01 L 23/32 <br> G 02 B 6/42 <br> G 02 B 7/00 |
| A | EP-A-0 092 720 (SIEMENS AG) <br> * Ansprüche; Abbildungen * <br> ----- | 1-4 | |

|  |
|---|
| **RECHERCHIERTE SACHGEBIETE (Int. Cl.4)** |
| H 01 L 23/32 <br> H 01 L 21/58 <br> G 02 B 6/42 |

Der vorliegende Recherchenbericht wurde für alle Patentansprüche erstellt

| Recherchenort | Abschlußdatum der Recherche | Prüfer |
|---|---|---|
| BERLIN | 22-08-1988 | KEMSLEY E.E.K. |